# EUROPEAN PATENT SPECIFICATION

(11) **EP 2 617 279 B1**
(45) Date of publication and mention of the grant of the patent: **07.11.2018**
(21) Application number: 12196830.9
(22) Date of filing: 12.12.2012
(51) Int. Cl.: A01D 46/26

(54) **Fruit harvesting equipment**
Erntevorrichtung für Früchte
Dispositif de récolte de fruits

(30) Priority: 12.12.2011 PT 10605511
(43) Date of publication of application: 24.07.2013
(73) Proprietor: Universidade de Évora, 7000-803 Évora (PT); Victor Cardoso, LDA., 6001-901 Castelo Branco (PT)
(72) Inventor: Nobre de Oliveira Peça, José Manuel, 7005-449 ÉVORA (PT); Cipriano Pinheiro, Anacleto, 7055-837 ÉVORA (PT); Bento Dias, António Fernando, 2025-562 TREMÊS (PT); Martins Cardoso, Vitor Manuel, 6100-607 Sertã (PT)
(74) Representative: Ferreira, Maria Silvina

(56) References cited:
- WO-A1-2008/059096
- US-A- 5 355 667
- US-A- 5 660 033
- US-B1- 6 378 282

## Description

### Field of the invention

The present invention relates to a fruits harvesting equipment group, in particularly equipment designed for fruit harvesting from tree or bush branches by a process of impact or shaking.

### Background of the invention

The modern olive plantations are mainly of two types: high density groves (HDG), typically from 300 to 400 trees per hectare, and very high density groves (VHDG), typically more than a 1000 trees per hectare.

HDG uses olive local cultivars, which enable the production of olive oil with appellations of origin. On the other hand, VHDG require the use of selected cultivars that combine a high production capacity with a low plant development. Presently, the cultivar Arbequina (originally from Catalonia) counts for the most used in VHDG.

The present expansion of VHDG will led to an olive market with a high quantity of olive oil from a particular cultivar, in competition with olive oil with appellations of origin. The prices will, consequently, reflect said competition.
Therefore the reduction in the production costs of HDG should be faced as an urgent matter to assure the survival of this type of groves. This goal involves reducing harvesting costs, which constitute the major part of the total costs.

In harvesting HDG, the traditional harvesting with trunk vibrators encounters specific limitations, as the lack of space for the harvesting equipment performance associated to the vibrators; and mainly, because it is a discontinuous technique, based on a repetition of operating cycles, which causes massive fatigue in personnel and equipment. These limitations gave way to the canopy shaking harvesting equipment, running through the orchard in a continuous form. Thus besides allowing greater work capacity, eliminate much of the hand labour required in the discontinuous processes.

Currently, continuous canopy shaking harvesting equipment is already available in the market, particularly those based on automotive grape or of coffee harvesting machines. Invariably, one and other, are designed to go over the trees or bushes (displacement over the row), so that, sooner or later, their use is conditioned by the plants growth.

There are also on the market, equipment that, despite going over the trees, possess appreciable size and, therefore, are less limited in their harvesting performance. It is, however, its weight (several tens of tonnes) which imposes limitations in the European context, since waterlogged soils in the months of October to January strongly affect the performance of machines designed to evolve in very different soil conditions (at the time of harvesting) in their home countries (Argentina, Australia).

In VHDG cultivars limited growth, harvesting equipment are based on the concept of going over the trees can be used for several campaigns. The same equipment in local HDG cultivars will only be able to perform work during the first 2 years of production harvesting.

Only harvesting equipment through a lateral approach, without going over the tree or shrub, avoid the limitation imposed by natural growth, an aspect that was the basis of the present invention.

Continuous harvesting equipment of fruits, by vibration of the canopy, with lateral approach in which the equipment module is trailered by agricultural tractor in which the fruits are deployed to the ground is known in the state of the art, however, unlike the present invention, they have no interception system for detached fruits nor transport system for temporary storage.

The design of a self-propelled machine which comprises an interception system for detached fruit and a transport system for temporary storage is known in the state of the art. However in none of these known machines, is known a transport system for temporary fruit storage receptacle which is then placed on the ground.

Designing a machine mounted on 3-point hydraulic system of an agricultural tractor, which has an interception system for detached fruit and a transport system for temporary storage is known in the state of the art. However in none of these known machines, is known a transport system for temporary fruit storage to a receptacle, which is then placed on the ground.

Some patent applications relating to lateral harvesting approach, such as US5428947A and US6006507A applications, that present detached fruit systems based on " outstanding sticks with penetration and retraction" are also known in the state of the art, but do not indicate a storage system making use of a receptacle wherein the same is then placed on the ground, nor is there any clue and/or anticipation of a simultaneous advancement method of two independent symmetrical machines, one on each side of the canopy.

The patent US5660033A, which presents agricultural equipment that performs a two row at a time harvesting, using self-propelled machine is also known in the state of the art. This solution is quite different from the one presented in the present patent application, since this application discloses a progression method of two independent symmetrical machines, one on each side of canopy of trees or shrubs that define a row. This patent application makes use of agricultural tractors as driving vehicles and nothing is stated about the use of self-propelled machines.

The patent application US5622036A, which presents detaching fruit equipment based on air stream, is also known in the state of the art, but it gives no clues to a storage system making use of a receptacle wherein the same is then placed on the ground, as shown in the present patent application.

### Summary of the invention

The objective of the present invention is to describe a continuous harvesting equipment comprising a set of two fruit harvesting machines, the right side harvester and the left side harvester, each of which comprising the following elements:
- Binding system to the tractor;
- Positioning system of the semi-trailered chassis;
- System for detaching fruit from branches;
- Interception system for detached fruit;
- Transport system for transporting fruit to a storage receptacle;
- Deposition system of receptacles on the ground;
- Control system of the fruit harvesting machine.

According to the invention, the positioning system of the semi-trailered chassis comprises a sliding towing coupler, moved by a hydraulic actuator connected to the external service of the tractor's hydraulic system.

In a preferred embodiment, the binding system to the tractor comprises a hydraulic power unit, mounted on the three-point bar system of the tractor.
In another preferred embodiment, the hydraulic power unit comprises a sliding towing coupler to a semi-trailered chassis.

In a preferred embodiment, the fruit harvesting machine presents a rear axle where the semi-trailered chassis is supported by a central pivot.
In another preferred embodiment, the fruit harvesting machine comprises hydraulic actuators, placed in between the axle and the chassis.

Yet, in another preferred embodiment, the fruit harvesting machine comprises steering of the axle wheels of the semi-trailered chassis.

In a preferred embodiment, the system for detaching fruit from branches comprise a vibrating mast fitted with several movable stories which have, in turn, radially inserted rods.

In another preferred embodiment, the vibrating mast is connected its base to the vibrating mechanism hydraulic drive, which is enclosed in a carter.

Yet, in another preferred embodiment, the carter is connected by a pivot to the anterior part of the chassis of the fruit harvesting machine and is supported by rollers at the rear of the chassis of fruit harvesting machine.

In a preferred embodiment, the fruit harvesting machine comprises a hydraulic actuator placed in between the carter and the chassis.

In another preferred embodiment, the interception system for detached fruit presents a fruit receiving platform, in the plane of the chassis, comprising sliding plates connected to the vibrating mast.

Yet, in another preferred embodiment, the fruit harvesting machine presents a screen for intercepting projected fruit, perpendicular to the chassis and opposite to the tree or shrub to be harvested.

In a preferred embodiment, the fruit harvesting machine presents a segmented screen for intercepting projected fruit in the front corner of the chassis closer to the tree or shrub to be harvested.

In a preferred embodiment, the transport system for transporting fruit to the storage receptacle comprises a conveyor belt oriented in the lengthwise direction and another in the transversal direction of fruit harvesting machine and an elevator conveyor belt oriented in lengthwise direction of the fruit harvesting machine.

In another preferred embodiment, the deposition system of receptacles on the ground comprises a fork for suspending the storage receptacle, which is mounted on a pantograph bars assembly, actuated by a hydraulic actuator.

Yet, in another preferred embodiment, the control system of the fruit harvesting machine comprises a platform, integral with the fork for suspending the storage receptacle, which is mounted on a pantograph bars assembly, actuated by a hydraulic actuator.

### Brief description of the figures

For an easier understanding of the invention figures are herein attached, which represent preferred embodiments and which, however, are not intended to limit the scope of the present invention.
Figure 1 shows a fruit harvesting machine.
Figure 2 shows two side façades views of the right fruit harvesting machine, near the side of the tree or shrub row to harvest (a) and opposite to the tree or bush (b) wherein the reference numbers indicate:
   1 - right fruit harvesting machine;
   2 - agricultural tractor;
   3 - fruit harvesting machine.
Figure 3 shows the binding between the fruit harvesting machine and the agriculture tractor, wherein the reference numbers indicate:
   4 - hydraulic power unit;
   5 - towing coupler;
   6 - semi-trailered chassis.
Figure 4 shows a detail of the semi-trailered chassis towing coupler of the right side harvesting machine, wherein the reference numbers indicate:
   4 - hydraulic power unit;
   5 -towing coupler.
Figure 5 shows a detail of the sliding towing coupler of the right harvesting machine in the transport position (A) and in the working position (B), wherein the reference numbers indicate:
   5 -towing coupler.
Figure 6 shows a detail of the central pivot of the rear axle of the semi-trailered chassis, wherein the reference numbers indicate:
   6 - semi-trailered chassis;
   7 - rear axle;
   8 - central pivot.
Figure 7 shows a detail the inclination of the semi-trailered chassis on the right harvesting machine, wherein the reference numbers indicate:
   6 - semi-trailered chassis;
   7 - rear axle;
   8 - central pivot;
   9 - hydraulic actuators.
Figure 8 shows a detail of the steering axle of the semi-trailered chassis.
Figure 9 shows a detail of the vibrating mast for fruit detachment, wherein the reference numbers indicate:
   10 - vibrating mast;
   11 - Story;
   12 - rod.

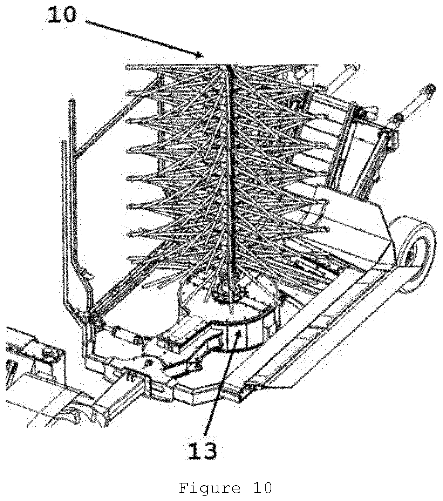

Figure 10 shows a detail of the vibrating mast and the vibration mechanism carter for fruit detachment, wherein the reference numbers indicate:
   10 - vibrating mast;
   13 - carter.
Figure 11 shows an inserting detail of the vibration mechanism carter in the chassis of the fruit harvesting machine, wherein the reference numbers indicate: 6 - semi-trailered chassis;
   10 - vibrating mast;
   13 - carter;
   14 - pivot;
   15 - hydraulic actuator.
Figure 12 shows two different views wherein the vibrating mast is in the greater penetration position into the canopy (A) and in a less penetration position into the canopy (B).
Figure 13 shows a detail of the fruit receiving platform of the right harvesting machine, wherein the reference numbers indicate:
   16 - fruit receiving platform;
   17 - sliding plates;
   18 - vibrating mast flange.

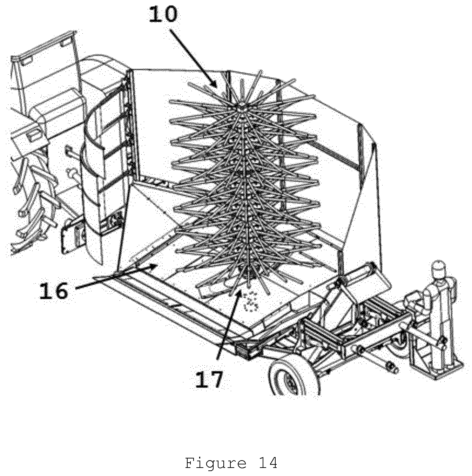

Figure 14 shows a detail of the fruit receiving platform of the right harvesting machine, wherein the reference numbers indicate:
   10 - vibrating mast.
   16 - fruit receiving platform;
   17 - sliding plates;
Figure 15 shows a detail of the intercepting screen for projected fruits in the case of the right harvesting machine, wherein the reference numbers indicate:
   6 - semi-trailered chassis;
   19 - screen.
Figure 16 shows two views of frontal screen, at rest (A) and on individual folding of segment (B), wherein the reference numbers indicate:
   20 - segment.
Figure 17 shows a detail of the interface components with the tree trunk, wherein the reference numbers indicate:
   21 - tray;
   22 - strip of flexible strips.
Figure 18 shows a detail of the interface components with the tree trunk on the right harvesting machine, wherein the reference numbers indicate:
   21 - tray;
   22 - strip of flexible strips.
Figure 19 shows fruit transport system of the right harvesting machine, wherein the reference numbers indicate: 16 - fruit receiving platform;
   21 - tray;
   23 - lengthwise conveyor belt;
   24 - transversal conveyor belt;
   25 - elevator conveyor belt.

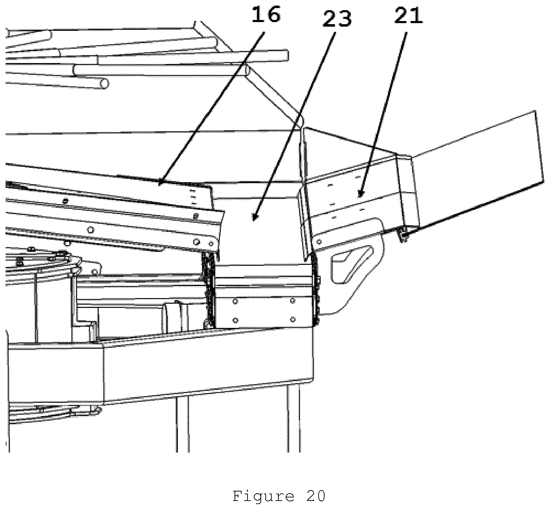

Figure 20 shows a detail of the fruit lengthwise conveyor belt of the right harvesting machine, wherein the reference numbers indicate:
   16 - fruit receiving platform;
   21 - tray;
   23 - lengthwise conveyor belt.

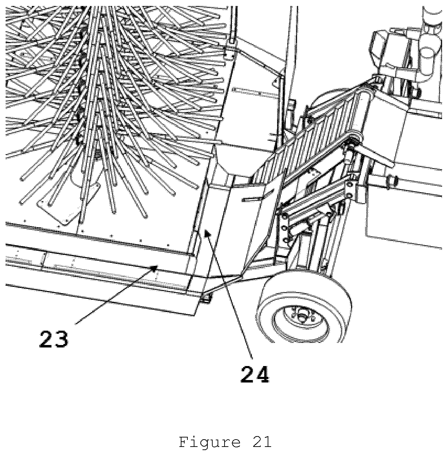

Figure 21 shows a detail of the fruit transversal conveyor belt on the right harvesting machine, wherein the reference numbers indicate:
   23 - lengthwise conveyor belt;
   24 - transversal conveyor belt.
Figure 22 shows a detail view of the fruit elevator conveyor belt of the right harvesting machine, wherein the reference numbers indicate:
   24 - transversal conveyor belt;
   25 - elevator conveyor belt.
Figure 23 shows a detail of the suspension fork of the fruits storage receptacle, wherein the reference numbers indicate:
   25 - elevator conveyor belt;
   26 - fork;
   27 - storage receptacle.
Figure 24 shows a detail of the fork in pantograph, wherein the reference numbers indicate:
   26 - fork;
   27 - storage receptacle;
   28 - pantograph bars;
   29 - hydraulic actuator.

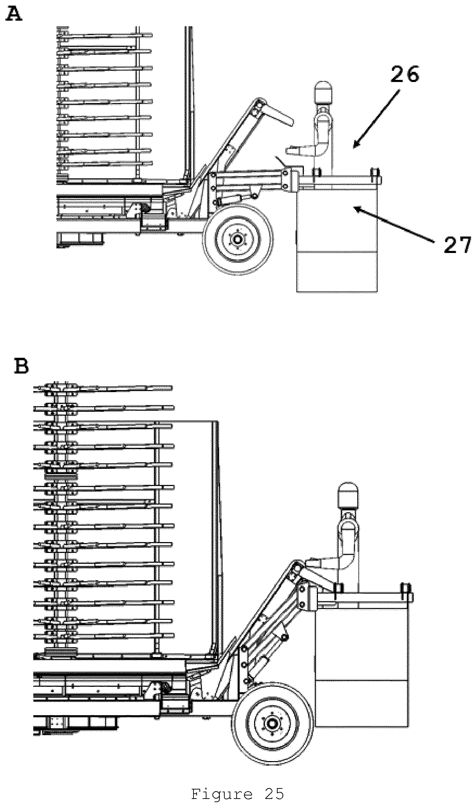

Figure 25 shows two views concerning the storage receptacle on the right harvesting machine: deposition on the ground (A) and in a working position (B), wherein the reference numbers indicate:
   26 - fork;
   27 - storage receptacle.
Figure 26 shows a detail of the harvesting control station, wherein the reference numbers indicate:
   26 - fork;
   27 - storage receptacle;
   30 - platform.
Figure 27 shows a harvesting control station, wherein the reference numbers indicate:
   28 - pantograph bars;
   29 - hydraulic actuator
   30 - platform.

### Detailed description of the invention

The detailed invention description of the invention refers to a continuous fruit harvesting equipment, sometimes referred as a preferred embodiment applied to a particular fruit - the olives, which should not be seen as a limitation of the scope of the invention.

The described invention is intended to fruit detachment of tree branches or bushes, to intercept the projection of these same fruits, transport them to storage receptacles (27) and to deposit the receptacles on the ground, when they are full.

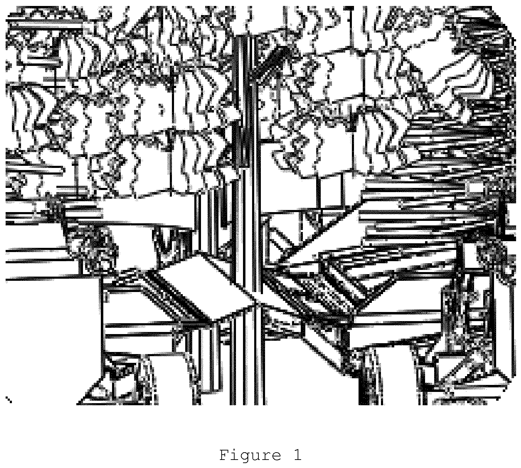

The invention described herein comprises a set of two fruit harvesting machines: a right fruit harvesting machine (1) and left fruit harvesting machine, as shown in Figure 1.

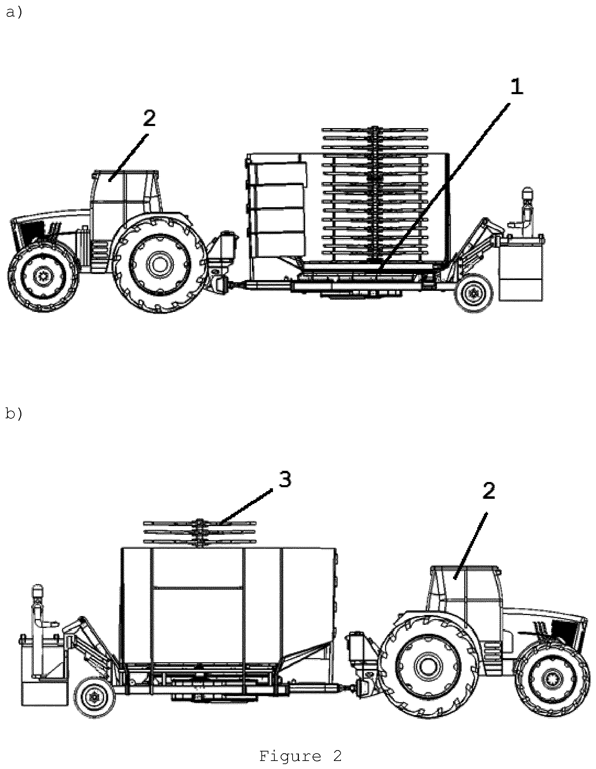

Each fruit harvesting machines (3), left or right, is driven by an agricultural tractor (2), as shown in Figure 2.

As previously indicated, the invention comprises a set of two fruit harvesting machines (3), right fruit harvesting machine (1) fruit and left fruit harvesting machine, being each fruit harvesting machine (3) constituted of the following systems indicated and described below:
Binding system to the tractor;
Positioning system of the semi-trailered chassis (6); System for detaching fruit from branches;
Interception system for detached fruit;
Transport system for transporting fruit to a storage receptacle (27);
Deposition system of receptacles on the ground;
Control system of the fruit harvesting machine (3).

### Binding system to the tractor

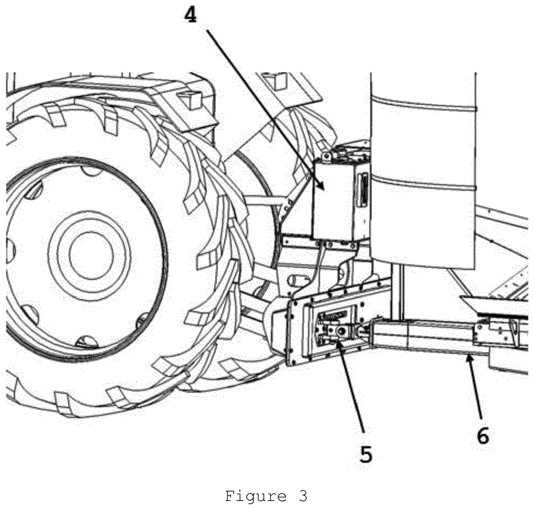

As previously indicated, each fruit harvesting machine (3) is bound to an agricultural tractor (2). This connection is made from the fruit harvesting machine (3), comprising a hydraulic power unit (4), mounted on the three-point bar system of the tractor which receives power take-jacket. The central hydraulic structure has a sliding towing coupler (5) to a semi-trailered chassis (6). An example of such binding is presented in Figure 3.

### Positioning system of the semi-trailered chassis (6)

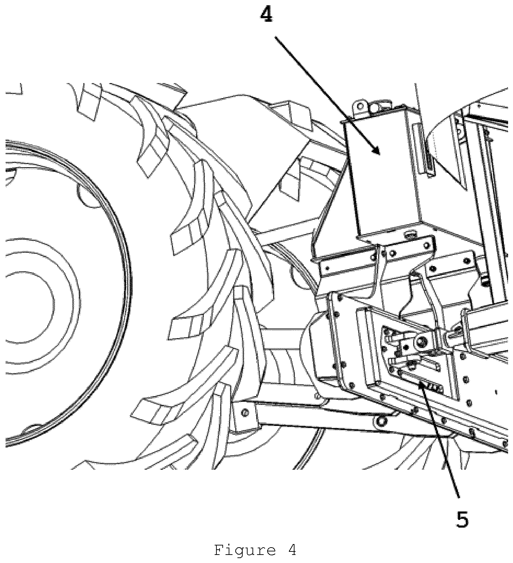

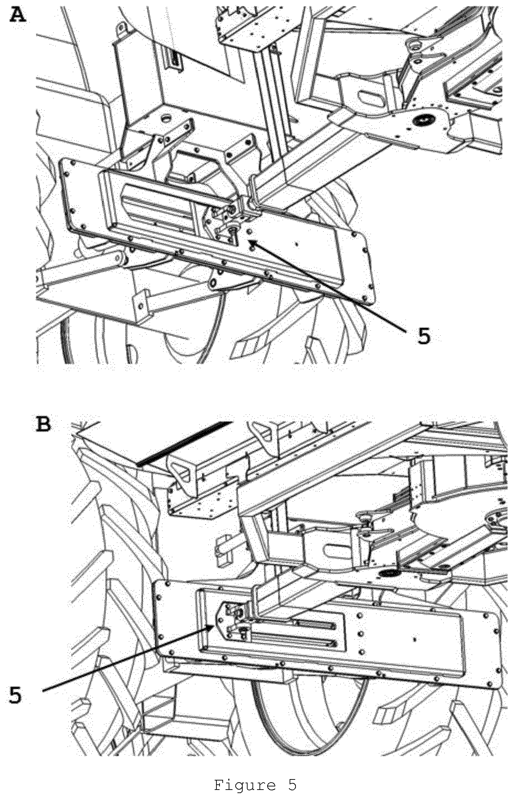

Each fruit harvesting machine (3), as exemplified in Fig. 4, has a positioning system of the semi-trailered chassis (6), which is constituted of the following elements: sliding towing coupler (5), moved by a hydraulic actuator connected to the external service of the hydraulic system of the tractor, which allows its movement in the transversal direction in the lengthwise axis of the tractor as shown in Figure 5. This system also allows the transversal positioning to the lengthwise axis of the tractor, namely the front of the semi-trailered chassis (6) .

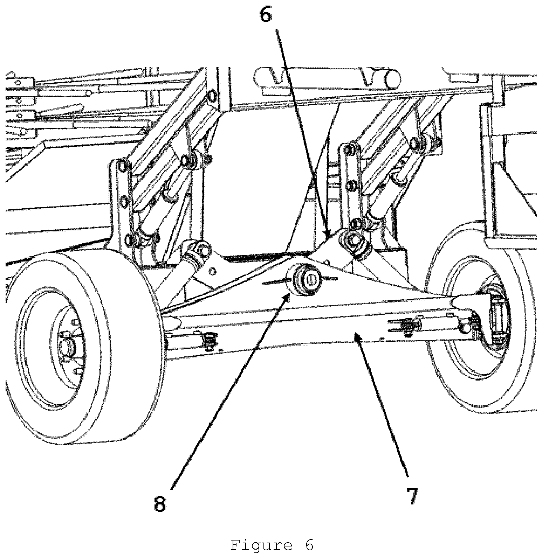

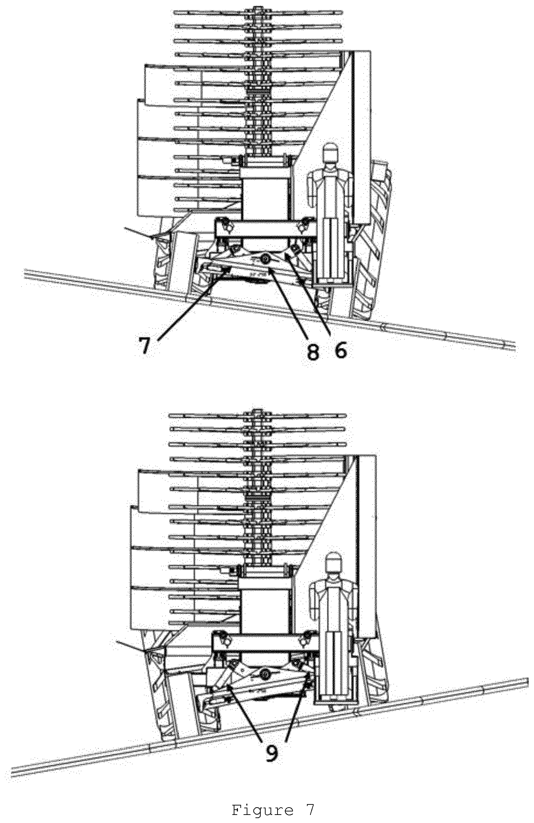

Each fruit harvesting machine (3) has a rear axle (7) where the semi-trailered chassis (6) is supported via a central pivot (8), as shown in Figure 6. Apart from these characteristics, the fruit harvesting machine (3) also presents hydraulic actuators (9), bonded in between the axle and the chassis, enabling adjustment of the lateral inclination of the semi-trailered chassis (6), as shown in Figure 7.

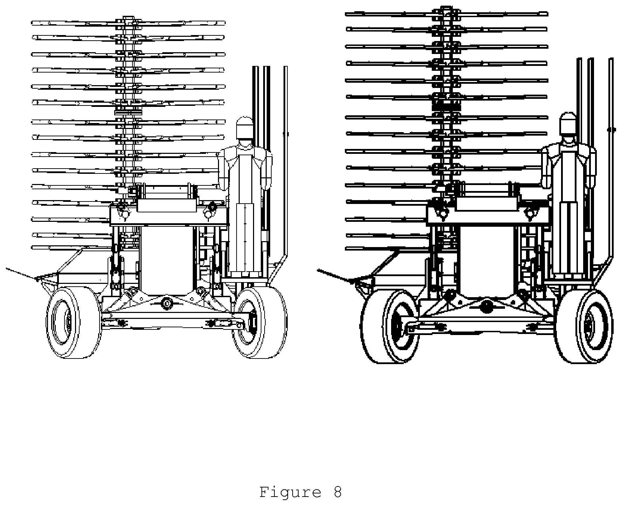

Each fruit harvesting machine (3) further comprises steering of the axle wheels of the semi-trailered chassis (6), for the transversal position in relation to the lengthwise axis of the tractor, of the rear of the semi-trailered chassis (6), as shown in figure 8.

### System for detaching fruit from branches

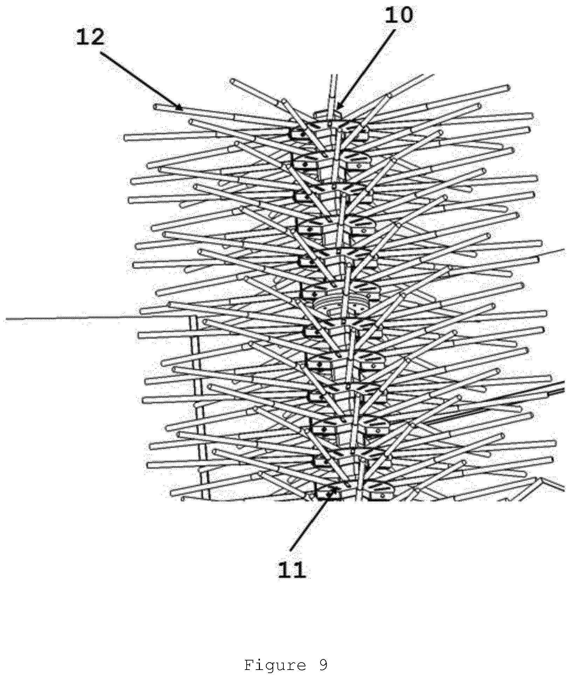

Each fruit harvesting machine (3) has a vibrating mast (10) fitted with several movable stories. Each story (11) has radially inserted rods (12) for transmitting vibrating energy to the branches, promoting fruit detachment, as shown in Figure 9.

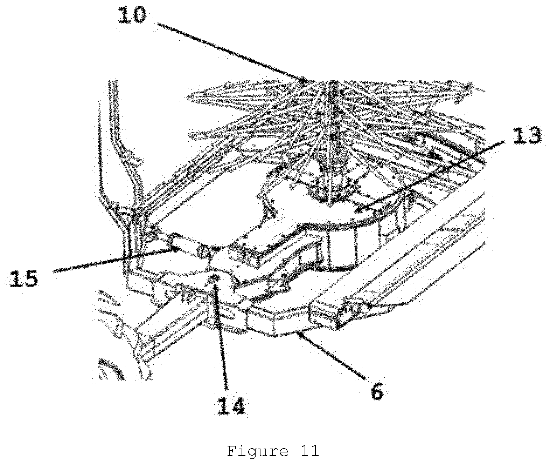

The vibrating mast (10) is connected at its base to the vibrating mechanism hydraulic drive, which is enclosed in carter (13), with lubrication. The carter (13) is connected by a pivot (14) to the anterior part of the chassis of fruit harvesting machine (3) and is supported by rollers at the rear of the chassis of fruit harvesting machine (3), which can be moved around the pivot (14) by the action of a hydraulic actuator (15). This hydraulic actuator (15) is placed in between the carter (13) and the chassis and allows its transversal positioning to the lengthwise axis of fruit harvesting machine (3) as exemplified in figure 11.

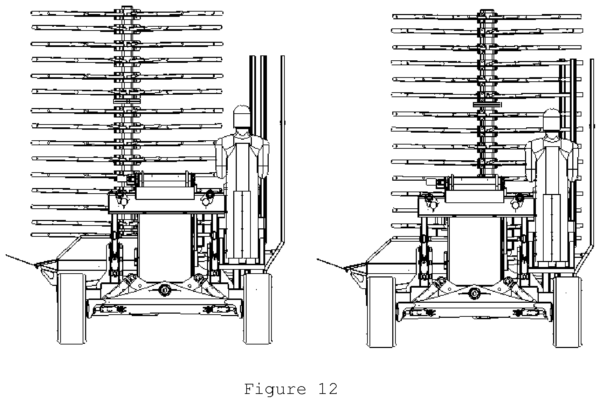

The vibrating mast (10) also allows its transversal positioning to the lengthwise axis of the machine harvesting. Thus, the degree of penetration of the rods (12) in the canopy of the tree or shrub can be changed, adapting to the shape of the canopy and to the preferred location of the fruits to harvest, as exemplified in Figure 12.

### Interception system for detached fruit

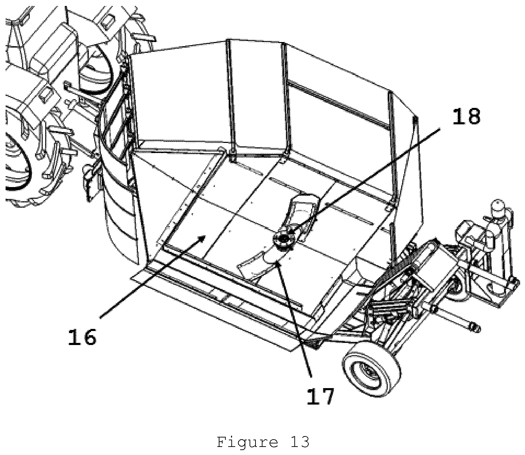

Each fruit harvesting machine (3) presents, in the plane of the chassis, a fruit receiving platform (16) with an inclination towards the tree or shrub to be harvested. Sliding plates (17) connected to the vibrating mast (10), plug where the tear is performed by lateral displacement of the vibrating mast (10), as shown in Figure 13.

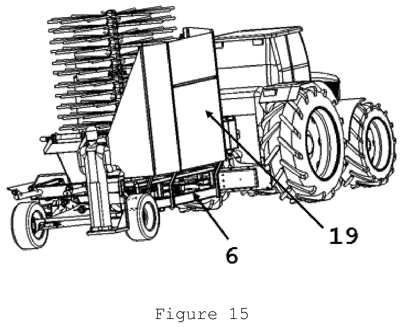

In the perpendicular plane to the chassis and on the opposite side to the tree or shrub to be harvested, the fruit harvesting machine (3) displays a screen (19) designed for interception of projected fruit, as illustrated in Figure 15.

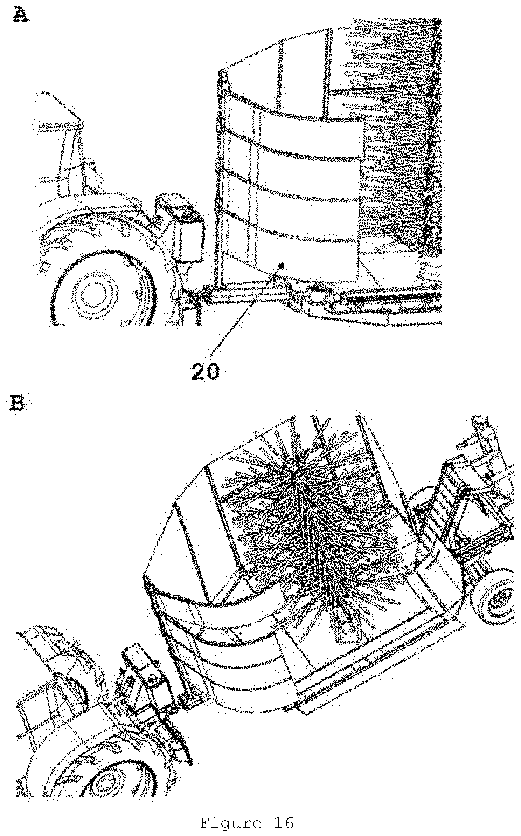

Each fruit harvesting machine (3) presents, at the front corner of the chassis closer to the tree or shrub to be harvested, a segmented screen (19) for projected fruit interception. Each segment (20) articulated on a common amount, allowing it to bounce during collision with branches of the tree or shrub to be harvested, and return to the initial position due to a spring, as exemplified in figure 16.

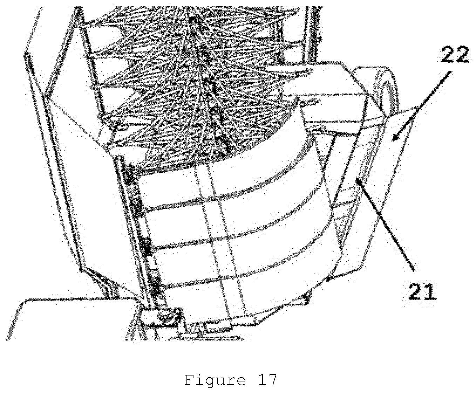

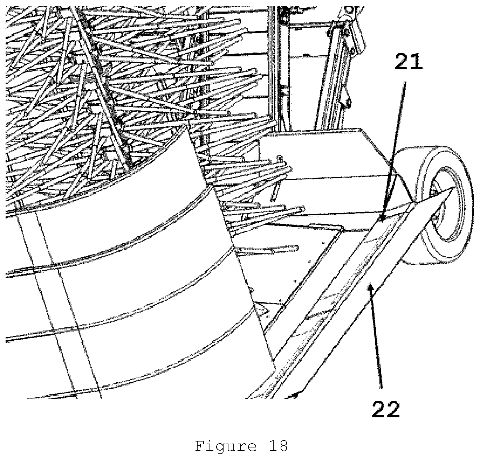

Each fruit harvesting machine (3) has, along the chassis, interfacing components with the trunk of the tree or shrub to be harvested intended to intercept the fruits with a falling trajectory along the trunk. The interface consists of a tray (21) with inclination toward the machine, which extends from the side of the tree by a strip of flexible strips (22), as exemplified in Figures 17 and 18.

### Transport system for transporting fruit to a storage receptacle (27)

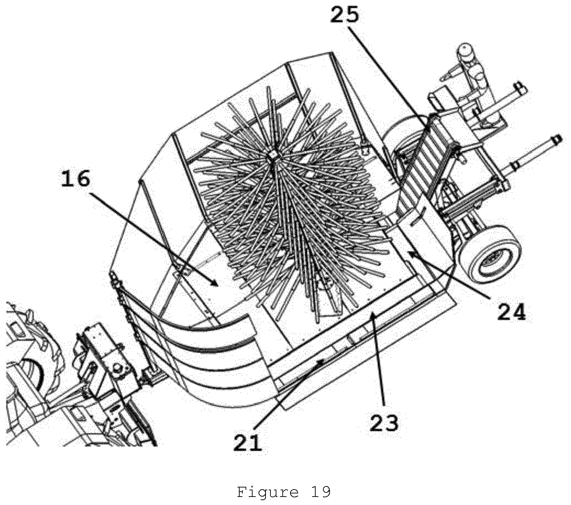

Each fruit harvesting machine (3) comprises a conveyor belt oriented in the lengthwise direction of the fruit harvesting machine (3), located so as to receive the fruits by gravity that converge therein due to the inclination of the tray (21) and the receiving platform, as shown in Figure 19.

Each fruit harvesting machine (3) comprises a conveyor belt oriented in the transversal direction of the fruit harvesting machine (3), located so as to receive and transport the fruits which converge therein from the conveyor belt oriented in the lengthwise direction, as exemplified on Figure 19.

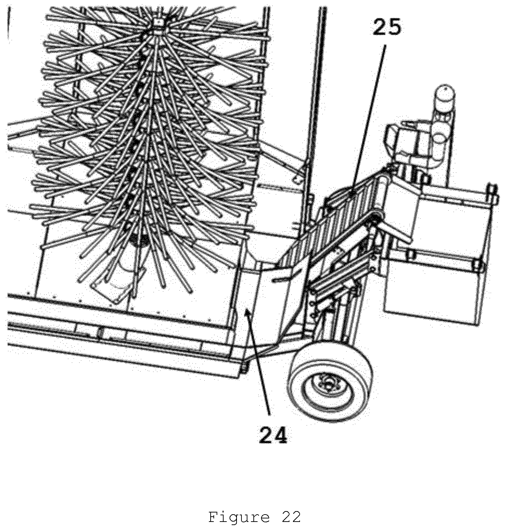

Each fruit harvesting machine (3) comprises an elevator conveyor belt (25) oriented in the lengthwise direction of the fruit harvesting machine (3), located so as to receive the fruits by gravity that converge therein from the conveyor belt oriented in the transversal direction, as exemplified in Figures 19 and 22.

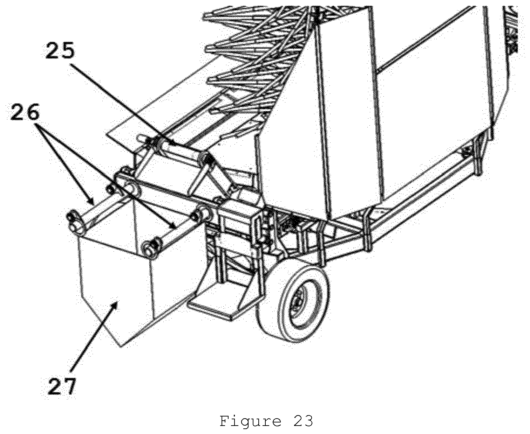

Each fruit harvesting machine (3) comprises a fork (26) for suspending the storage receptacle (27) is located so as to receive the fruits by gravity that converge therein from the elevator conveyor belt (25), as shown in Figure 23.

### Deposition system of receptacles on the ground

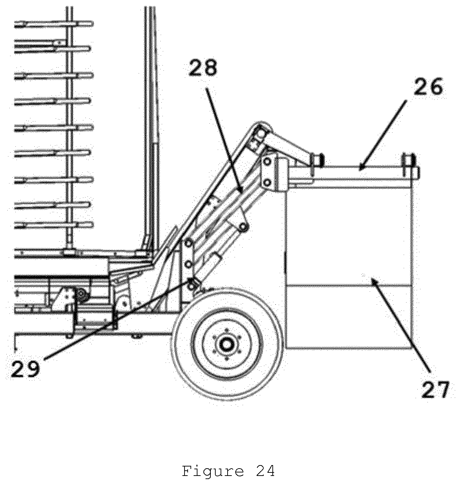

Each fruit harvesting machine (3) comprises a fork (26) for suspending the storage receptacle (27), which is mounted on a pantograph bars (28) assembly actuated by hydraulic actuator (29). This storage receptacle (27) suspension fork (26) can be moved vertically relative to the ground, as shown on Figure 24.

### Control system of the fruit harvesting machine

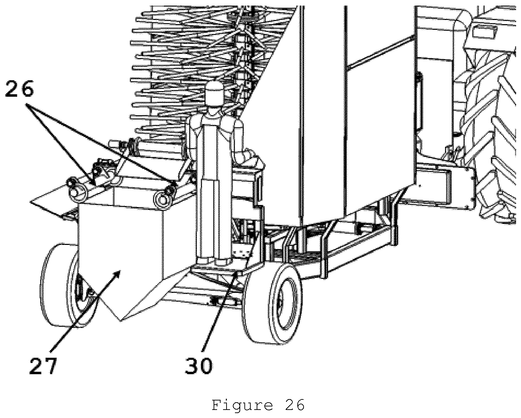

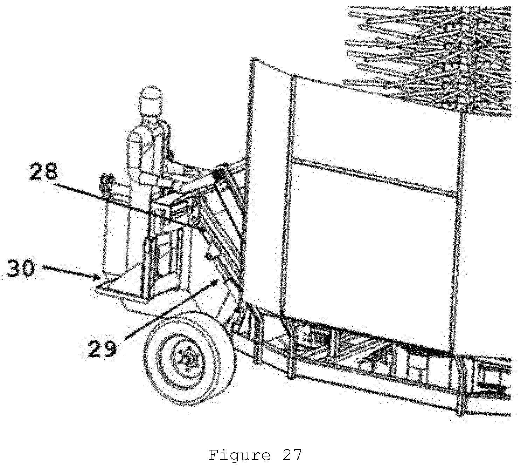

Each fruit harvesting machine (3) comprises a control station, comprising a platform, integral with the fork (26) for suspending the storage receptacle (27), as shown in Figure 26. The platform is mounted on a pantograph bars (28) assembly, actuated by hydraulic actuator (29), which permits the control station to be moved vertically relative to the ground, as shown in Figure 27.

The control station operator, through electro-hydraulic controls, can act in the following systems:
- System for detaching fruit from branches;
- Positioning system of the semi-trailered chassis (6);
- Transport system for transporting fruit to the storage receptacle (27);
- Deposition system of receptacles on the ground.

The transversal positioning of the front chassis semi-trailered is controlled by the operator of the tractor via the external service of the tractor's hydraulic system.

## Claims

1. Continuous harvesting equipment comprising a set of two fruit harvesting machines (3), the right side harvester and the left side harvester, each of which comprising the following elements:
- Binding system to the tractor;
- System for detaching fruit from branches;
- Interception system for detached fruit;
- Transport system for transporting fruit to a storage receptacle (27);
- Deposition system of receptacles on the ground;
- Control system of the fruit harvesting machine (3); and
- Positioning system of the semi-trailered chassis (6) wherein the system comprises a sliding towing coupler (5), moved by a hydraulic actuator (9) connected to the external service of the tractor's hydraulic system.

2. Continuous harvesting equipment according to the previous claim, wherein the binding system to the tractor comprises a hydraulic power unit (4), mounted on the three-point bar system of the tractor.

3. Continuous harvesting equipment according to the previous claims, wherein the hydraulic power unit (4) comprises a sliding towing coupler (5) to a semi-trailered chassis (6).

4. Continuous harvesting equipment according to the previous claims, wherein the fruit harvesting machine (3) presents a rear axle (7) where the semi-trailered chassis (6) is supported by a central pivot (8).

5. Continuous harvesting equipment according to the previous claim, wherein the fruit harvesting machine (3) comprises hydraulic actuators (9), placed in between the axle and the chassis.

6. Continuous harvesting equipment according to the previous claims 4 or 5, wherein the fruit harvesting machine (3) comprises steering of the axle wheels of the semi-trailered chassis (6).

7. Continuous harvesting equipment according to the previous claims, wherein the system for detaching fruit from branches comprise a vibrating mast (10) fitted with several movable stories (11) which have, in turn, radially inserted rods (12).

8. Continuous harvesting equipment according to the previous claim 7, wherein the vibrating mast (10) is connected at its base to the vibrating mechanism hydraulic drive, which is enclosed in a carter (13).

9. Continuous harvesting equipment according to the previous claim, wherein the carter (13) is connected by a pivot (14) to the anterior part of the chassis of the fruit harvesting machine (3) and is supported by rollers at the rear of the chassis of fruit harvesting machine (3).

10. Continuous harvesting equipment according to the previous claims 8 or 9, wherein the fruit harvesting machine (3) comprises a hydraulic actuator (15) placed in between the carter (13) and the semi-trailered chassis (6).

11. Continuous harvesting equipment according to the previous claims 7 to 10, wherein the interception system for detached fruit presents a fruit receiving platform (16), in the plane of the chassis, comprising sliding plates (17) connected to the vibratingmast (10).

12. Continuous harvesting equipment according to the previous claims, wherein the fruit harvesting machine (3) presents a screen (19) for intercepting projected fruit, perpendicular to the chassis and opposite to the tree or shrub to be harvested.

13. Continuous harvesting equipment according to the previous claims, wherein the fruit harvesting machine (3) presents a segmented screen (19) for intercepting projected fruit in the front corner of the chassis closer to the tree or shrub to be harvested.

14. Continuous harvesting equipment according to the previous claims, wherein the transport system for transporting fruit to the storage receptacle (27) comprises a conveyor belt oriented in the lengthwise direction and another in the transversal direction of fruit harvesting machine (3) and an elevator conveyor belt oriented in lengthwise direction of the fruit harvesting machine (3).

15. Continuous harvesting equipment according to the previous claims, wherein the deposition system of receptacles on the ground comprises a fork (26) for suspending the storage receptacle (27), which is mounted on a pantograph bars (28) assembly, actuated by a hydraulic actuator (29).

16. Continuous harvesting equipment according to the previous claim, wherein the control system of the fruit harvesting machine (3) comprises a platform, integral with the fork (26) for suspending the storage receptacle (27), which is mounted on a pantograph bars (28) assembly, actuated by a hydraulic actuator (29).

## Patentansprüche

1. Kontinuierliche Ernteeinrichtung, umfassend einen Bausatz von zwei Obsterntemaschinen (3), das rechte Erntegerät und das linke Erntegerät, wobei jedes davon die folgenden Elemente umfasst:
- Verbindungssystem zum Traktor;
- System für die Abtrennung von Obst von Ästen;
- Abfangsystem für abgetrenntes Obst;
- Transportsystem zum Transport von Obst zu einem Lagerbehälter (27);
- Ablagesystem zum Ablegen von Behältern auf dem Boden;
- Steuersystem der Obsterntemaschine (3); und
- Positionierungssystem des Sattelanhängerfahrgestells (6), wobei das System eine verschiebbare Schleppkupplung (5) umfasst, die von einem an die externe Versorgung des Hydrauliksystems des Traktors angeschlossenen Hydraulikzylinder (9) betätigt wird.

2. Kontinuierliche Ernteeinrichtung gemäß dem vorherigen Anspruch, wobei das Verbindungssystem zum Traktor ein Hydraulikaggregat (4) umfasst, das auf dem drei Punkte Stangensystem des Traktors montiert ist.

3. Kontinuierliche Ernteeinrichtung gemäß den vorherigen Ansprüchen, wobei das Hydraulikaggregat (4) eine verschiebbare Schleppkupplung (5) zu einem Sattelanhängerfahrgestell (6) umfasst.

4. Kontinuierliche Ernteeinrichtung gemäß den vorherigen Ansprüchen, wobei die Obsterntemaschine (3) eine Hinterachse (7) aufweist, an der das Sattelanhängerfahrgestell (6) von einem zentralen Drehpunkt (8) abgestützt wird.

5. Kontinuierliche Ernteeinrichtung gemäß dem vorherigen Anspruch, wobei die Obsterntemaschine (3) Hydraulikzylinder (9) umfasst, die zwischen der Achse und dem Fahrgestell angebracht sind.

6. Kontinuierliche Ernteeinrichtung gemäß den vorhergehenden Ansprüchen 4 oder 5, wobei die Obsterntemaschine (3) eine Lenkung der Achsenräder des Sattelanhängerfahrgestells (6) umfasst.

7. Kontinuierliche Ernteeinrichtung gemäß den vorherigen Ansprüchen, wobei das System für die Abtrennung von Obst von Ästen einen schwingenden Mast (10) umfasst, der mit mehreren mobilen Etagenscheiben (11) ausgerüstet ist, die wiederum radial angebrachte Stangen (12) besitzen.

8. Kontinuierliche Ernteeinrichtung gemäß dem vorhergehenden Anspruch 7, wobei der schwingende Mast (10) an seinem Unterteil mit dem hydraulisch angetriebenen Schwingmechanismus verbunden ist, der in einem Gehäuse (13) untergebracht ist.

9. Kontinuierliche Ernteeinrichtung gemäß dem vorherigen Anspruch, wobei das Gehäuse (13) über einen Zapfen (14) mit dem Vorderteil des Fahrgestells der Obsterntemaschine (3) verbunden ist und im Hinterteil des Fahrgestells der Obsterntemaschine (3) von Rollen abgestützt wird.

10. Kontinuierliche Ernteeinrichtung gemäß den vorhergehenden Ansprüchen 8 oder 9, wobei die Obsterntemaschine (3) einen Hydraulikzylinder (15) umfasst, der zwischen dem Gehäuse (13) und dem Sattelanhängerfahrgestell (6) angebracht ist.

11. Kontinuierliche Ernteeinrichtung gemäß den vorhergehenden Ansprüchen 7 bis 10, wobei das Abfangsystem für abgetrenntes Obst eine Obstaufnahmeplattform (16) in der Fahrgestellebene aufweist, welche mit dem schwingenden Mast (10) verbundenen Gleitplatten (17) umfasst.

12. Kontinuierliche Ernteeinrichtung gemäß den vorherigen Ansprüchen, wobei die Obsterntemaschine (3) eine senkrecht zum Fahrgestell und gegenüber dem zu erntenden Baum oder Strauch Abschirmung (19) aufweist, um ausgeworfenes Obst abzufangen.

13. Kontinuierliche Ernteeinrichtung gemäß den vorherigen Ansprüchen, wobei die Obsterntemaschine (3) eine segmentierte Abschirmung (19) an der vorderen Kante des Fahrgestells in der Nähe des zu erntenden Baums oder Strauchs aufweist, um ausgeworfenes Obst abzufangen.

14. Kontinuierliche Ernteeinrichtung gemäß den vorherigen Ansprüchen, wobei das Transportsystem zum Transport von Obst zu dem Lagerbehälter (27) ein, in Längsrichtung der Obsterntemaschine (3) ausgerichtetes Förderband und ein anderes, in Querrichtung ausgerichtetes Band sowie ein in Längsrichtung der Obsterntemaschine (3) ausgerichtetes Elevatorförderband umfasst.

15. Kontinuierliche Ernteeinrichtung gemäß den vorherigen Ansprüchen, wobei das Ablagesystem von Behältern auf dem Boden eine Hubgabel (26) zum Aufhängen der Lagerbehälter (27) umfasst, welche an einer Pantographstangen-Baugruppe (28) montiert ist, die von einem Hydraulikzylinder (29) betätigt wird.

16. Kontinuierliche Ernteeinrichtung gemäß dem vorherigen Anspruch, wobei das Steuersystem der Obsterntemaschine (3) eine Plattform umfasst, die in der Hubgabel (26) zum Aufhängen der Lagerbehälter (27) integriert ist, welche an einer Pantographstangen-Baugruppe (28) montiert ist, die von einem Hydraulikzylinder (29) betätigt wird.

## Revendications

1. Équipement de récolte en continu comprenant un ensemble de deux récolteuses de fruits (3), la récolteuse côté droit et la récolteuse côté gauche, chacune d'entre elles comprenant les éléments suivants :
- Système d'attelage au tracteur ;
- Système pour détacher les fruits des branches ;
- Système d'interception pour les fruits détachés ;
- Système de transport pour transporter les fruits dans un réceptacle de stockage (27) ;
- Système de dépôt des réceptacles sur le sol ;
- Système de commande de la récolteuse de fruits (3) ; et
- Système de positionnement du châssis semi-remorque (6) où le système comprend un attelage de remorque coulissant (5), mû par un actionneur hydraulique (9) connecté au service externe du système hydraulique du tracteur.

2. Équipement de récolte en continu selon la revendication précédente, où le système d'attelage au tracteur comprend une unité de puissance hydraulique (4), montée sur le système de barre d'attelage à trois points du tracteur.

3. Équipement de récolte en continu selon les revendications précédentes, où l'unité de puissance hydraulique (4) comprend un attelage de remorque coulissant (5) sur un châssis semi-remorque (6).

4. Équipement de récolte en continu selon les revendications précédentes, où la récolteuse de fruits (3) présente un essieu arrière (7) où le châssis semi-remorque (6) est supporté par un pivot central (8).

5. Équipement de récolte en continu selon la revendication précédente, où la récolteuse de fruits (3) comprend des actionneurs hydrauliques (9), placé entre l'essieu et le châssis.

6. Équipement de récolte en continu selon les revendications précédentes 4 ou 5, où la récolteuse de fruits (3) comprend la direction des roues de l'essieu du châssis semi-remorque (6) .

7. Équipement de récolte en continu selon les revendications précédentes, où le système pour détacher les fruits des branches comprend un mât vibrant (10) muni de plusieurs niveaux mobiles (11) ayant eux-mêmes des barres (12) insérées radialement.

8. Équipement de récolte en continu selon la revendication précédente 7, où le mât vibrant (10) est connecté à sa base à l'entrainement hydraulique du mécanisme de vibration, qui est enfermé dans un carter (13).

9. Équipement de récolte en continu selon la revendication précédente, où le carter (13) est connecté par un pivot (14) à la partie antérieure du châssis de la récolteuse de fruits (3) et est supporté par des rouleaux à l'arrière du châssis de la récolteuse de fruits (3).

10. Équipement de récolte en continu selon les revendications précédentes 8 ou 9, où la récolteuse de fruits (3) comprend un actionneur hydraulique (15) placé entre le carter (13) et le châssis semi-remorque (6).

11. Équipement de récolte en continu selon les revendications précédentes 7 à 10, où le système d'interception pour les fruits détachés présente une plateforme de réception des fruits (16), dans le fond plat du châssis, comprenant des plaques coulissantes (17) connectées au mât vibrant (10).

12. Équipement de récolte en continu selon les revendications précédentes, où la récolteuse de fruits (3) présente un écran (19) pour intercepter les fruits projetés, perpendiculaire au châssis et opposé à l'arbre ou à l'arbuste dont les fruits doivent être récoltés.

13. Équipement de récolte en continu selon les revendications précédentes, où la récolteuse de fruits (3) présente un écran segmenté (19) pour intercepter les fruits projetés dans le coin avant du châssis le plus proche de l'arbre ou de l'arbuste dont les fruits sont récoltés.

14. Équipement de récolte en continu selon les revendications précédentes, où le système de transport pour transporter les fruits vers le réceptacle de stockage (27) comprend un convoyeur à bande orienté dans le sens de la longueur et un autre dans le sens transversal de la récolteuse de fruits (3) et un élévateur à bande orienté dans le sens de la longueur de la récolteuse de fruits (3).

15. Équipement de récolte en continu selon les revendications précédentes, où le système de dépôt des réceptacles sur le sol comprend une fourche (26) pour suspendre le réceptacle de stockage (27), qui est montée sur un ensemble de barres de type pantographe (28), actionné par un actionneur hydraulique (29).

16. Équipement de récolte en continu selon la revendication précédente, où le système de commande de la récolteuse de fruits (3) comprend une plateforme intégrée avec la fourche (26) pour suspendre le réceptacle de stockage (27), qui est monté sur un ensemble de barres de type pantographe (28), actionné par un actionneur hydraulique (29).
